# EUROPEAN PATENT APPLICATION

(11) **EP 1 983 443 A1**
(43) Date of publication of application: **22.10.2008**
(21) Application number: 08004621.2
(22) Date of filing: 12.03.2008
(51) Int. Cl.: G06F 13/42

(54) **Serial communication method and serial communication system**

(30) Priority: 16.04.2007 JP 2007107199
(71) Applicant: Murata Machinery, Ltd., Minami-ku Kyoto-shi Kyoto 601-8326 (JP)
(72) Inventor: Kumano, Toshiya, Kyoto-shi Kyoto 612-8686 (JP)
(74) Representative: Zimmermann, Tankred Klaus

(57) **Abstract**

A host device continuously transmits a same command or a same piece of data to a remote device in serial form. The remote device receives the command or the data, and then determines whether the command or the data has an error. When the command or the data has no error, the remote device transmits a response to the host device. Upon reception of the response, the host device stops the continuous transmission of the command or the data.

## Description

### CROSS-REFERENCE TO RELATED APPLICATION

This application claims priority to Japanese Patent Application No. 2007-107199, filed on April 16, 2007, which application is hereby incorporated by reference in its entirety.

### BACKGROUND OF THE INVENTION

### 1. Field of the Invention

The present invention relates to a serial communication method and a serial communication system, in which a host device transmits a command or data to a remote device and, then, the remote device that has correctly received the command or the data sends back a response to the host device. In particular, the present invention relates to a serial communication method capable of bringing about the following advantage. That is, according to this method, even in a case where a malfunction occurs at the time when a transmitting side transmits a command or data to a receiving side, the receiving side does not need to issue a retransmission request to the transmitting side, leading to reduction of a latency time.

### 2. Description of Related Art

Recently, there has been known a serial communication method in which a host device transmits a command or data to a remote device and, then, the remote device that has correctly received the command or the data sends back a response signal (hereinafter, simply referred to as a "response") to the host device.

Conventionally, a host computer transmits data to a peripheral, and then the peripheral replies the data. If the received data has an error, the peripheral detects the error by a parity check or a check sum, and then transmits data concerning the error of the received data, as a retransmission request, to the host computer. Thus, the host computer retransmits the data to the peripheral.

If the peripheral detects the error of the received data, the host computer retransmits the data to the peripheral; therefore, the peripheral can execute processing for the received data with certainty. However, there is a possibility that the data concerning the error of the received data also has an error. In order to overcome this drawback, there has been proposed another serial communication method. In this method, a host computer transmits data to a peripheral. After a lapse of a predetermined time since the transmission of the data, if the host computer correctly receives no data concerning an error of the data from the peripheral, then, the host computer retransmits the data to the peripheral.

### BRIEF SUMMARY OF THE INVENTION

In the conventional serial communication described above, however, the transmitting side transmits data to the receiving side and, then, waits for a retransmission request from the receiving side. Upon reception of the retransmission request, thereafter, the transmitting side retransmits the data to the receiving side. During a procedure of the data retransmission, however, the receiving side sends back no response relative to the received data to the transmitting side, resulting in disadvantageous increase of a time expended until the receiving side sends back a response relative to the received data to the transmitting side, that is, a latency time.

As described above, the transmitting side transmits data to the receiving side. After a lapse of a predetermined time since the transmission of the data, if the transmitting side correctly receives no transmission request from the receiving side, then, the transmitting side retransmits the data to the receiving side. In such a serial communication method, there occurs further delay in response to the data, resulting in further increase of a latency time.

The present invention has been devised in consideration of the circumstances described above, and an object thereof is to provide a serial communication method capable of bringing about the following advantage. That is, according to this method, even in a case where a malfunction occurs at the time when a transmitting side transmits a command or data to a receiving side, the receiving side does not need to issue a retransmission request to the transmitting side, leading to reduction of a latency time.

According to a first aspect of the preset invention, there is provided a serial communication method in which a host device transmits a command or data to a remote device and, then, the remote device that has correctly received the command or the data sends back a response to the host device. Herein, the host device continuously transmits the command or the data during a period of time until reception of the response from the remote device.

According to a second aspect of the present invention, the host device that has correctly received the response relative to the command or the data from the remote device stops the continuous transmission of the command or the data.

According to a third aspect of the present invention, the host device embeds an identification code in the command or the data to be transmitted continuously, and the remote device correctly receives the command or the data from the host device, sends back the response to the host device and invalidates the command or the data which is received after sending back the response and has the identification code embedded therein.

According to the first aspect of the present invention, the host device continuously transmits a same command or a same piece of data to the remote device until it correctly receives a response from the remote device. Even when the received command or the received data has an error, the remote device can correctly receive the command or the data without issuing a retransmission request to the host device, leasing to reduction of a latency time.

According to the second aspect of the present invention, the host device that has correctly received the response relative to the command or the data from the remote device stops the continuous transmission of the command or the data. The host device recognizes, from the response, a fact that the command or the data has been correctly transmitted to the remote device. Then, the host device stops the continuous transmission of the command or the data, and transmits a different command or a different kind of data to the remote device. This configuration makes a command transmission rate or a data transmission rate high.

According to the third aspect of the present invention, the host device embeds an error detection code in the command or the data to be transmitted continuously. The remote device correctly receives the command or the data from the host device, sends back the response to the host device, and invalidates the command or the data which is received after sending back the response and has the error detection code embedded therein. Therefore, the remote device does not repeatedly execute processing based on a same command or a same piece of data that has received from the host device.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating schematic configurations of a host device and a remote device that realize a serial communication method according to the present invention;

Fig. 2 is a flowchart illustrating one example of basic operations of the host device; and

Fig. 3 is a flowchart illustrating one example of basic operations of the remote device.

### DETAILED DESCRIPTION OF THE INVENTION

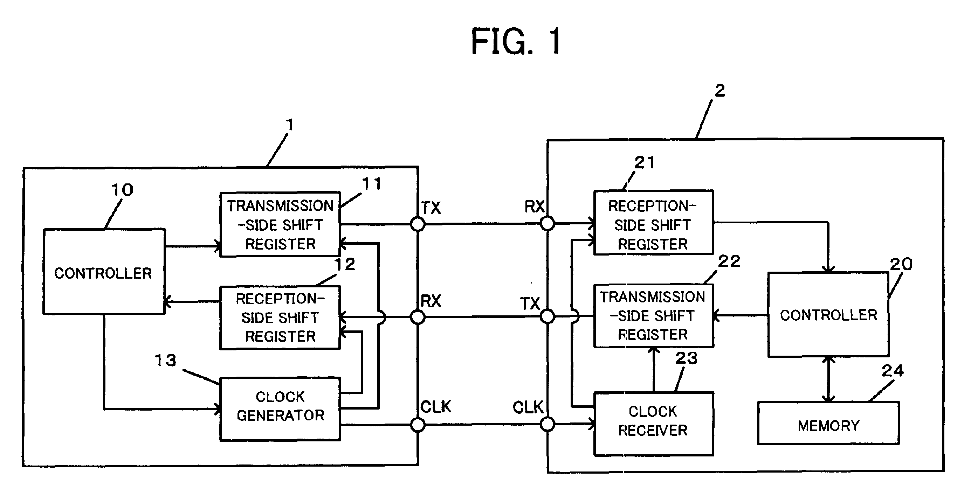

Fig. 1 is a block diagram illustrating one example of main configurations of a host device and a remote device that can realize a serial communication method according to the present invention.

As illustrated in Fig. 1, the host device 1 has a transmission terminal TX, a reception terminal RX and a clock signal terminal CLK. The terminals of the host device 1 are connected to the remote device 2 through signal lines, respectively. On the other hand, the remote device 2 has a reception terminal RX, a transmission terminal TX and a clock signal terminal CLK that correspond to the transmission terminal TX, the reception terminal RX and the clock signal terminal CLK of the host device 1, respectively. The terminals of the remote device 2 are connected to the host device 1 through the signal lines, respectively.

The host device 1 includes a transmission-side shift register 11 that corresponds to the transmission terminal TX, and a reception-side shift register 12 that corresponds to the reception terminal RX. The host device 1 also includes a clock generator 13 that corresponds to the clock signal terminal CLK, outputs an operation clock signal for the transmission-side shift register 11 and the reception-side shift register 12, and outputs a clock signal for a reception-side shift register 21 and a transmission-side shift register 22 of the remote device 2. The host device 1 also includes a controller 10 that takes a form of, for example, a central processing unit (CPU) and controls the entire host device 1.

The transmission-side shift register 11 transmits a read command or a write command to the remote device 2 on a one character basis. Alternatively, the transmission-side shift register 11 transmits data to be written, to the remote device 2, on the one character basis. The reception-side shift register 12 receives a response containing the data stored in the remote device 2 or a response relative to the write command, from the remote device 2 on the one character basis.

In order to determine whether the remote device 2 has correctly received the command or the data, the controller 10 embeds an error detection code in the command or the data, and the transmission-side shift register 11 continuously transmits the command or the data until the reception-side shift register 12 receives a correct response. When the reception-side shift register 12 has received the correct response, the controller 10 allows the transmission-side shift register 11 to stop the continuous transmission of the command or the data. Herein, the controller 10 determines whether the response is correct, from a fact whether a relation between an error detection code embedded in the response and the received response is established regularly. If the relation is established regularly, the controller 10 determines that response is received correctly.

The controller 10 embeds an identification code (hereinafter, referred to as an "ID code") in the command or the data and, then, the transmission-side shift register 11 transmits the command or the data having the ID code embedded therein to the remote device 2 in order to allow the remote device 2 to determine whether the command or the data to be received herein is equal to the command or the data that has been received correctly.

Further, the controller 10 must determine whether the response received by the reception-side shift register 12 corresponds to the command or the data transmitted by the transmission-side shift register 11. Therefore, a controller 20 of the remote device 2 embeds, in the response, an ID code which is equal to the ID code embedded in the command or the data transmitted by the host device 1. If the ID code of the response is equal to the ID code of the command or the data, the controller 10 determines that the response transmitted by the remote device 2 corresponds to the command or the data transmitted by the host device 1.

The remote device 2 includes the reception-side shift register 21 that corresponds to the reception terminal RX, the transmission-side shift register 22 that corresponds to the transmission terminal TX, a clock receiver 23 that receives the clock signal from the host device 1 through the clock signal terminal CLK and outputs the clock signal to the reception-side shift register 21 and the transmission-side shift register 22, a memory 24 that includes one or plural data memories having addresses allocated thereto in advance, respectively, and the controller 20 that takes a form of, for example, a CPU and controls the entire remote device 2.

The reception-side shift register 21 receives a read command or a write command from the host device 1 on a one character basis. Alternatively, the reception-side shift register 21 receives data to be written, on the one character basis. The transmission-side shift register 22 transmits, to the host device 1, a response containing the data stored in the remote device 2 or a response relative to the write command, on the one character basis.

When the reception-side shift register 21 correctly receives the command or the data transmitted continuously by the host device 1, the controller 20 determines whether the command or the data has been received already. If the command or the data has not been received yet, the controller 20 sends back the response having the error detection code embedded therein to the host device 1 so as to allow the host device 1 to determine whether the response has been received correctly. Herein, the controller 20 determines whether the remote device 2 has correctly received the command or the data transmitted continuously by the host device 1, from a fact whether a relation between the error detection code for error detection embedded in the command or the data and the received command or the received data is established regularly. If the relation is established regularly, the controller 20 determines that the remote device 2 has correctly received the command or the data.

The controller 20 embeds, in the response to be sent back to the host device 1, the ID code which is equal to the ID code embedded in the command or the data that has been correctly received by the reception-side shift register 21 so as to allow the controller 10 of the host device 1 to determine whether the received response corresponds to the command or the data transmitted by the transmission-side shift register 11.

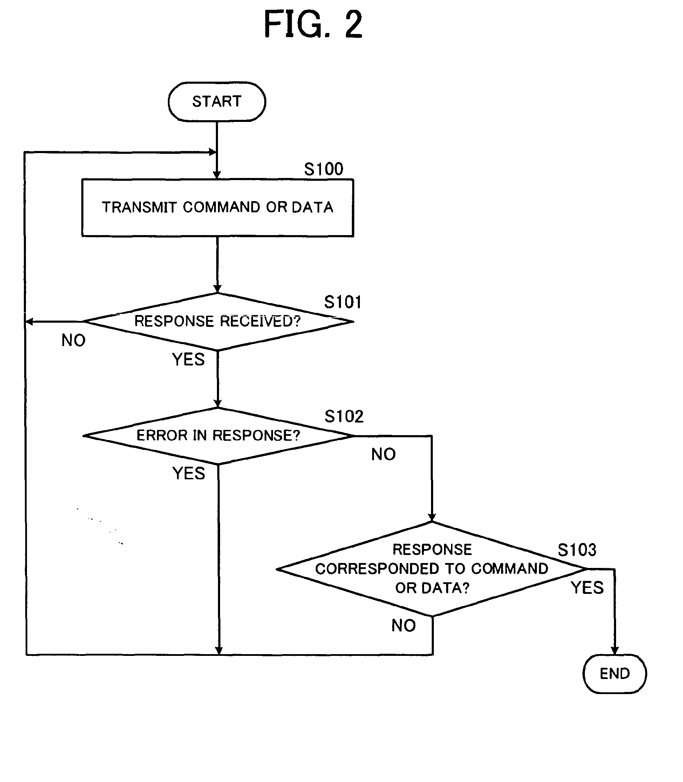

Fig. 2 is a flowchart illustrating one example of the basic operations of the host device 1 (S100 to S103).

The host device 1 continuously transmits the command or the data to the remote device 2 until the host device 1 correctly receives the response from the remote device 2 (S100 to S102). Herein, the frequency of the continuous transmission may be preset. If the host device 1 does not receive the correct response from the remote device 2 even when transmitting the command or the data by the preset times, then, the host device 1 may notify the remote device 2 of an error.

If the host device 1 correctly receives the response from the remote device 2, then, the host device 1 determines whether the response corresponds to the command or the data that has been transmitted already. If the response corresponds to the command or the data, the host device 1 executes processing based on the response. If the response does not correspond to the command or the data, the host device 1 prepares for transmission of a different command or a different kind of data (S103).

As described above, the host device 1 continuously transmits the same command or the same piece of data to the remote device 2 until the host device 1 correctly receives the response from the remote device 2. Even in the case where the remote device 2 does not receive the command or the data yet or the command or the data received by the remote device 2 has an error, the host device 1 continuously transmits the command or the data until the remote device 2 correctly receives the command or the data. The host device 1 does not require such a procedure of retransmitting the command or the data after reception of an error notification from the remote device 2, leading to reduction of a latency time.

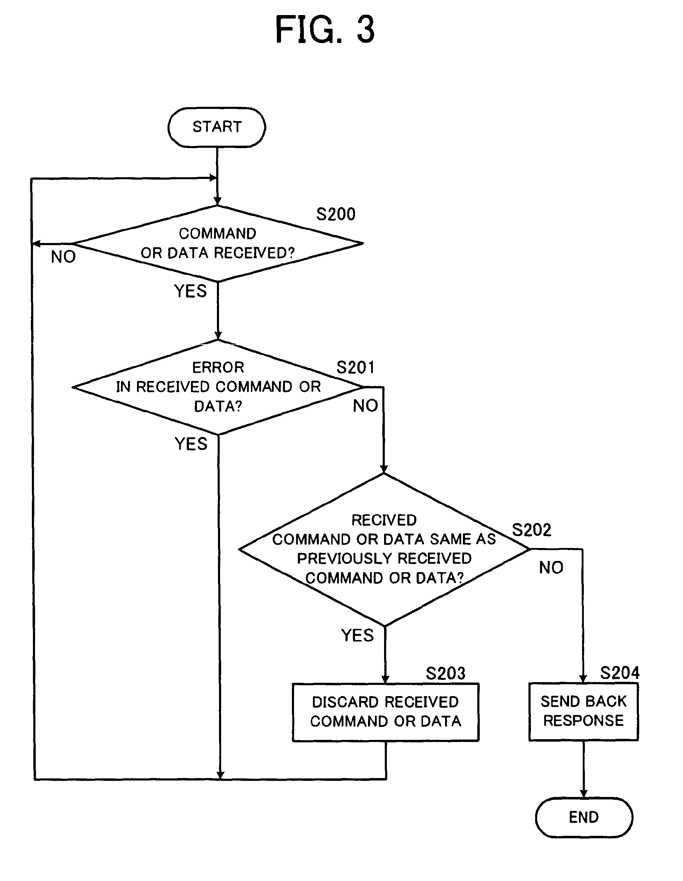

Fig. 3 is a flowchart illustrating one example of the basic operations of the remote device 2 (S200 to S204).

The remote device 2 receives the command or the data from the host device 1 (S200), and determines whether the command or the data has an error for each reception of the command or the data (S201).

If the received command or the received data has no error (No in S201), the remote device 2 determines whether the command or the data is equal to the command or the data that has been received already (S202). If the command or the data is different from the command or the data that has been received already, the remote device 2 sends back the response to the host device 1 (S209) . On the other hand, if the command or the data is equal to the command or the data that has been received already, the host device 2 discards the command or the data (S203).

As described above, the remote device 2 continuously receives the command or the data until the remote device 2 correctly receives the command or the data from the host device 1. If the remote device 2 has correctly received the command or the data, then, the remote device 2 sends back the response to the host device 1. Even in the case where the remote device 2 does not receive the command or the data yet from the host device 1 or the command or the data received by the remote device 2 has an error, then, the remote device 2 accepts the transmission of the command or the data without issuing no retransmission request until the remote device 2 correctly receives the command or the data, leading to reduction of a latency time.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

## Claims

1. A serial communication method in which a host device (1) transmits a command or data to a remote device (2) and, then, the remote device (2) that has correctly received the command or the data sends back a response to the host device (1), **characterized in that**
the host device (1) continuously transmits the command or the data (S100) during a period of time until reception of the response from the remote device (2) (S101).

2. The serial communication method according to claim 1, **characterized in that**
the host device (1) that has correctly received the response relative to the command or the data from the remote device (2) (S102, S103) stops the continuous transmission of the command or the data.

3. The serial communication method according to claim 1 or 2, **characterized in that**
the host device (1) embeds an identification code in the command or the data to be transmitted continuously, and the remote device (2) correctly receives the command or the data from the host device (1), sends back the response to the host device (1) (S204) and invalidates the command or the data which is received after sending back the response and has the identification code embedded therein (S203).

4. A serial communication system comprising: a host device (1) configured to transmit a command or data, and a remote device (2) configured to receive the command or the data and transmit a response, **characterized in that**
the host device (1) includes: a first transmission-side shift register (11) that transmits the command or the data; a first reception-side shift register (12) that receives the response from the remote device (2); and a first controller (10) that allows the first transmission-side shift register (11) to continuously transmit the command or the data until the first reception-side shift register (12) receives the response, and
the remote device (2) includes: a second reception-side shift register (21) that receives the command or the data; a second transmission-side shift transistor (22) that transmits the response; and a second controller (20) that allows the transmission-side shift register (22) to transmit the response when the reception-side shift register (21) has correctly received the command or the data.

5. The serial communication system according to claim 4, **characterized in that**
the host device (1) further includes a clock generator (13) that transmits a clock signal, wherein the first transmission-side shift register (11) transmits the command or the data in synchronization with the clock signal, and the first reception-side shift register (12) receives the response in synchronization with the clock signal, and
the remote device (2) further includes a clock receiver (23) that receives the clock signal from the clock generator (13), wherein the second reception-side shift register (21) receives the command or the data in synchronization with the received clock signal, and the second transmission-side shift register (22) transmits the response in synchronization with the received clock signal.
